Europäisches Patentamt

European Patent Office

Office européen des brevets

(19)

(11) Publication number: **0 079 700**
**A2**

(12) **EUROPEAN PATENT APPLICATION**

(21) Application number: **82305688.2**

(22) Date of filing: **27.10.82**

(51) Int. Cl.³: **B 23 C 5/26**

(30) Priority: **16.11.81 GB 8134523**
**20.10.82 GB 8229908**

(43) Date of publication of application:
**25.05.83 Bulletin 83/21**

(84) Designated Contracting States:
**AT BE CH DE FR GB IT LI LU NL SE**

(71) Applicant: **Lord, Eric**
**11 Queen Street**
**Briercliffe Burnley Lancashire(GB)**

(72) Inventor: **Lord, Eric**
**11 Queen Street**
**Briercliffe Burnley Lancashire(GB)**

(74) Representative: **Neill, Alastair William et al,**
**Appleyard Lees & Co. 15 Clare Road**
**Halifax West Yorkshire HX1 2HY(GB)**

(54) Cutting tools.

(57) A shank, or a part attached to the shank, of a rotary cutting tool 28 has a formation 29 for use in holding the tool within a chuck 10. The length of the formation 29 in the direction of the rotary axis of the tool 28 is small in relation to the width of the formation 20, and the tool has an alignment face 32 accurately positioned in relation to the rotary axis of the tool 28. The formation 29 is operable to urge the alignment face 32 against a complimentary alignment face of the chuck 10 to make the rotary axis of the tool 28 as parallel as possible to the rotary axis of the chuck 10. The relatively short length of the formation 29 in relation to the width of the formation reduces any turning moment about a radial axis caused by misalignment or malformation of the formation and hence increases the extent to which engagement of the alignment faces controls the parallelism of the rotary axes of the tool 28 and the chuck 10. The coupling principle which results in alignment of the axes may also be applicable to the coupling together of other items.

Fig.6.

1.

## CUTTING TOOLS

The invention relates to cutting tools, for example milling cutters.

A very large number of different types of cutting tool exist and a very large number of different types of chuck exist for gripping the cutting tools.

One type of chuck, for example, comprises a body which supports a collet, the collet surrounding the shank of the tool. The collet is split so that it can flex towards the tool to grip it, and away from the tool to release it. It has a tapered outer face and gripping forces controlled by a locking sleeve, which surrounds the collet and has a taper which mates with the taper of the collet. Movement of the locking sleeve in the direction of the longitudinal axis of the tool causes a wedging action to take place between the mating tapers, bringing about the desired gripping movement of the collet.

With other types of chuck, the tool is screwed into the chuck, or into an intermediate member, and some chucks utilise a combination of threaded connection and tapered collet connection.

A disadvantage of known types of chuck is that it can be difficult to position the collet faces and/or screw-threads sufficiently accurately to ensure that the tool engages in the chuck with the rotary axis of the tool parallel and coincident with the rotary axis of the chuck. Clearly if the rotary axis of the tool is inclined, even slightly, with respect to the rotary axis

2.

of the chuck, the centre of the nose of the tool will wander slightly around a circular path, with adverse effects. It may for example be possible to form screw threads very accurately, but they may distort during subsequent heat treatment.

The invention seeks to alleviate or remove this problem by providing a rotary cutting tool, the shank of the tool or a part attached to the shank having a formation for use in holding the tool within a chuck, the length of the formation in the direction of the rptary axis of the tool being small in relation to the width of the formation, and the tool having an alignment face accurately positioned in relation to the rotary axis of the tool, the formation being operable to urge the alignment face against a complimentary alignment face of a chuck to make the rotary axis of the tool as parallel as possible to the rotary axis of the chuck, the relatively short length of the formation in relation to the width of the formation reducing any turning moment about a radial axis caused by any misalignment or malformation of the formation and hence increasing the extent to which engagement of the alignment faces controls the parallelism of the rotary axes of the tool and the chuck. Simple alignment faces, which may for example be flat faces, can much more easily be accurately formed, for example by means of a simple grinding operation.

Preferably the formation is also arranged to centralise the cutting tool in a chuck into which the tool is to be fitted, in order to make the rotary axis of the tool concentric with the rotary axis of the chuck.

3.

The formation may comprise a screw thread, the angle which flanks of the thread make with the rotary axis of the tool being sufficiently low such that when the tool is connected to a member having a complimentary thread, relative longitudinal movement between the tool and the member brings about a centralising and gripping action between the tool and the member.

The said angle is preferably less than 60°. It may for example be in the range 15° to 25°.

The thread formation need not be symmetrical. The angle which the thrust flanks make with the rotary axis of the tool may be substantially less than the angle which the non-thrust flanks make with the rotary axis of the tool.

In an alternative embodiment the formation may comprise a frustoconical surface.

The invention includes a rotary cutting tool according to the invention in combination with a collar having a complimentary frustoconical surface, the collar having attachment means to draw the collar on to a chuck to cause the frustoconical surface of the collar to act against the frustoconical surface of the tool and thus urge the alignment face of the tool towards the alignment face of the chuck.

The attachment means may comprise a screw-thread engageable with the screw-thread of the chuck.

The invention includes a rotary cutting tool in combination with an intermediate member which fits between the tool and the collar, the intermediate member having internal and external frustoconical faces.

The invention includes a rotary cutting tool in combination with a chuck having an alignment face which is complimentary to the alignment face of the tool.

4.

The alignment face of the chuck may comprise the base of a socket in the chuck body, the base being formed square to the rotary axis of the chuck.

The base of the socket may be formed by a thrust disc fitted into the chuck.

Alternatively the alignment face of the chuck may comprise an external face of the chuck.

The formation may be formed on an adapter in which the tool is fitted.

Preferably the length of the formation is equal to less than half the width of the formation.

The invention includes a cutting tool, the shank of the tool or a part attached to the shank being formed with a screw thread, the angle which flanks of the thread make with the longitudinal axis of the tool being sufficiently low such that when the tool is screwed into a member having a mating thread, relative longitudinal movement between the tool and the member brings about a centralising and gripping action between the tool and the member.

The invention includes a screw-threaded member for connection to another member having a mating screw thread, the angle which flanks of the thread make to the rotational axis of the member being sufficiently low such that when the member is screw-threadedly connected to another member having a mating thread, relative movement in the direction of the rotational axis brings about a centralising and gripping action.

5.

By way of example, specific embodiments of the invention will now be described, with reference to the accompanying drawings in which:-

Figure 1a is a cross-section through a first embodiment of cutting tool and chuck according to the invention;

Figure 1b is a similar view but showing a larger size of tool;

Figure 2 is a detail view to an enlarged scale of the thread formation formed on the tool shown in Figures 1a and 1b;

Figure 3 is a view of a peg spanner for use in adjusting the position of the tail centre of the chuck shown in Figures 1a and 1b;

Figure 4 is a view of an alternative embodiment of tool of very small dimension;

Figure 5 shows the tool of Figure 4 fitted into an adapter;

Figure 6 is a cross-section through yet another embodiment of the invention, comprising a single-ended cutting tool;

Figures 7 and 8 are respectively a plan view and a side view of a spanner for use with embodiments of the invention;

Figures 9 and 10 are respectively a plan view and a side view of a release device for use with the spanner shown in Figures 7 and 8;

Figure 11 is a cross-section through yet another embodiment of cutting tool and chuck according to the invention;

Figure 12 is a detail view to an enlarged scale of the thread formation formed on the tool shown in Figure 11;

Figure 13 is a detail view to an enlarged scale of the thread formation formed on the outer periphery of a collar of the embodiment shown in Figure 11;

Figure 14 is a view of a spanner for use with another embodiment of tool according to the invention;

Figure 15 is a cross-sectional view through yet another embodiment of tool according to the invention;

Figure 16 is a cross-section through yet another embodiment of tool according to the invention;

Figure 17 is a cross-section through a collar for use with the tool shown in Figure 16;

Figure 18 is a cross-section through yet another embodiment of tool and chuck according to the invention;

Figure 19 is a cross-section through yet another embodiment of chuck and tool according to the invention; and

Figure 20 is a cross-section through a test rig for use in mounting a tool in a chuck.

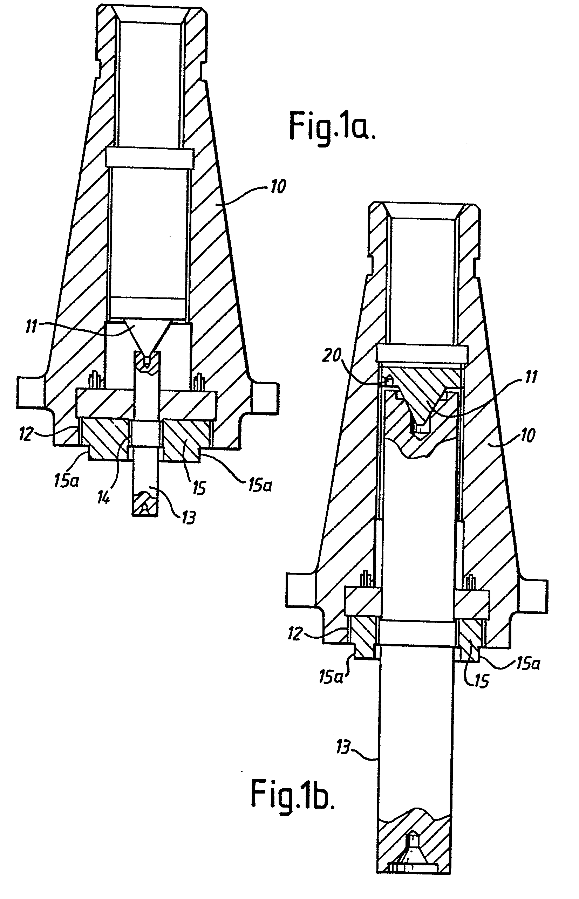

Referring firstly to Figures 1a and 1b, there is shown the chuck of a milling machine, the chuck comprising a body 10 and a tail centre 11 screw-threaded into the body such that rotation of the tail centre adjusts the longitudinal position of the tail centre between its two extreme positions, as shown in Figures 1a and 1b respectively. The mouth of the chuck is screw-threaded at 12.

A relatively small milling cutter 13 is shown mounted in the chuck in Figure 1a. This milling cutter is double-ended and between its ends there is a screw-threaded portion 14. The cutter 13 is screw-threaded into a spacer collar 15 which in turn is screw-threaded into the mouth of the chuck.

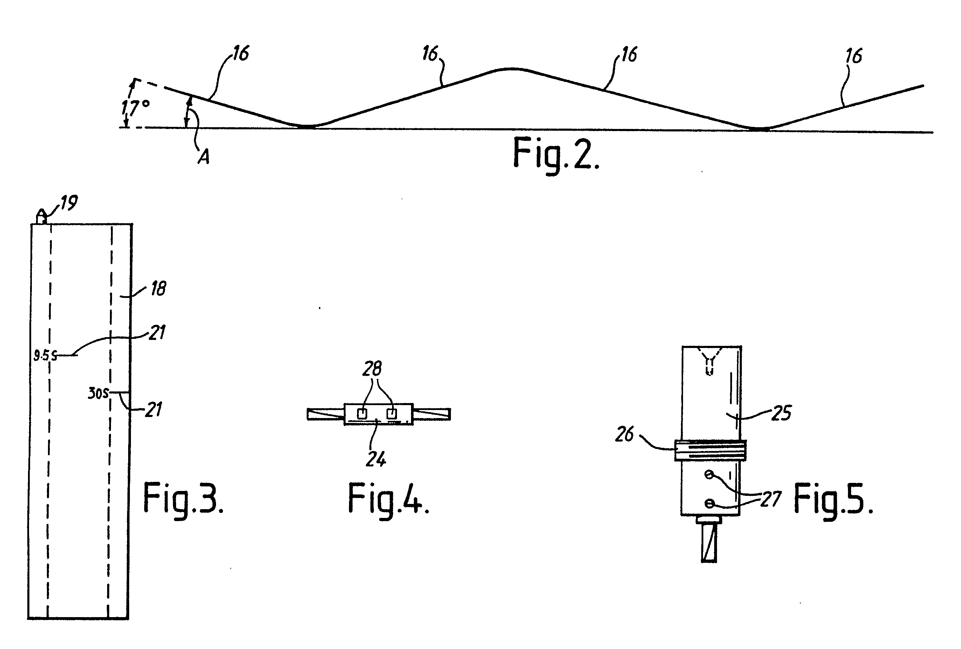

The thread on the tool 13, and the mating internal thread on the collar 15, are of unusual formation, and have the form shown in detail in Figure 2.

The angle A which the flanks 16 of the threads make with the longitudinal axis of the tool, i.e. with the rotary axis of the chuck, is very low. In this embodiment the angle A is $17^{\circ}$.

The effect of this is that when the tool is subjected to longitudinal loading, by forcing it against the tail centre 11, there is a pronounced radial component of force created, which causes the tool to be securely gripped.

The tool is urged against the tail centre 11 by screwing the collar 15, carrying the tool with it, into the chuck.

The thread formed on the outer periphery of the collar 15, and the mating thread on the chuck, has a lead or pitch which is greater than that of the thread on the tool. This means that even if the tool starts to rotate with respect to the collar 15, when the tool engages with the tail centre 11, thus causing the tool to move outwardly with respect to the collar 15, the rate at which the tool can move outwardly is nevertheless less than the rate at which the collar moves inwardly, so it is always possible to apply axial loading to the tool 13 by rotating the collar 15.

The formation of the thread on the outer periphery of the collar 15 and on the chuck body is generally similar to that shown in Figure 2, but it is not essential for the angle that the flanks make with the longitudinal axis to be as low as 17°. It is merely necessary to ensure that the threaded connection between the collar and the chuck can transmit substantially the same amount of torque as can the threaded connection between the collar and the tool. Since the threaded connection between the chuck and the collar is further from the axis of rotation than the threaded connection between the collar and the tool, less radial gripping force is needed, and hence less friction, and so the angle A can be greater. It may for example be 25° or 30°.

If a single start thread were used, then on any plane taken through the tool perpendicular to the longitudinal axis, the tool would only be supported at one point, giving rise to the risk of lopsided loading. In order to provide even loading and centralising effect, a multi start thread may be used, e.g. a triple start thread.

By using different sizes of collar 15, a wide range of different sized tools can be accommodated in a single chuck. Because there is only a single item between the tool and the chuck, namely the collar, a greater range of tools can be accommodated than with conventional chucks, which may require the interposition, between the tool and the chuck, of both a collet and a locking sleeve.

A larger size tool and its associated collar 15 is shown in Figure 1b.

In order to set the tail centre 11 at the desired depth to cope with any given tool, a peg spanner as shown in Figure 3 may be used. The spanner comprises an elongate sleeve 18 with a axially projecting peg 19 at one end. The peg is designed to fit into a small socket 20 on the tail centre so that the peg spanner can then be rotated

9.

from outside the chuck to rotate the tail centre and adjust its longitudinal position. The peg spanner 18 is marked at spaced apart intervals along its length with guide lines 21. Alongside each guide line is etched the size of a particular tool. Thus if it is desired to insert a particular size of tool into the chuck, the peg spanner is first inserted and rotated to move the tail centre until the relevant guide line is level with the mouth of the chuck.

With tools of extremely small radial dimensions, on which it may be difficult to provide the thread formation, the tool can be provided with a plain cylindrical shank portion as shown at 24 in Figure 4. An adapter 25, as shown in Figure 5, is provided carrying the necessary thread formation 26. The tool is inserted in a cylindrical socket in the adapter 25 and secured by means of two grub screws 27 which bear on flats 28 formed on the cylindrical shank portion of the tool.

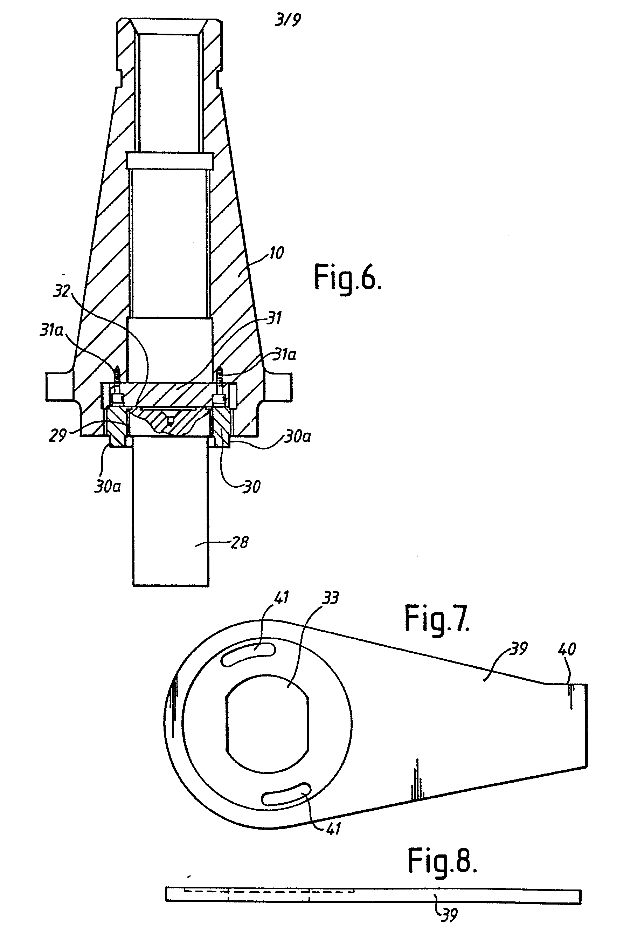

The invention is particularly applicable to single ended cutting tools, for example as shown in Figure 6.

The embodiment of end mill 28 shown in Figure 6 has a thread formation 29 formed at one end. The end mill is screwed into a collar 30 which is similar to the collar 15 shown in Figure 1, and this collar is screwed into a chuck 10. A thrust disc 31 is fitted into the chuck body 10 to receive the longitudinal thrust of the end mill 28, and is secured against rotation with respect to the chuck by screws 31a. The extreme inner end 32 of the end mill is slightly proud of the threaded portion 29 to avoid any risk of the threads being damaged by the pressure of the thrust disc 31.

The outer face of the thrust disc 31 is accurately ground so as to be as square as possible to the rotary axis of the chuck 10. The face of the end 32 of the tool which, in use, abuts the thrust disc 31 is also very accurately ground so as to be as square as possible to the rotary axis of the tool. Thus the outer face of the thrust disc 31 and the face of the inner end 32 of the tool provide alignment faces which, when they are securely abutting one another, ensure that the rotary axis of the chuck 10 is parallel to the rotary axis of the tool 28.

The length of the threaded portion 29 in the direction of the rotary axes is deliberately made as small as possible in relation to the width or diameter of the threaded portion of the tool. This reduces the turning moment that can be applied by the threads to the tool about an axis extending in the radial direction. This means that the engagement of the two alignment faces is the determining factor in deciding whether or not the rotary axis of the tool is parallel to the rotary axis of the chuck.

Thus, if the threads 29 are not completely true, so that, for example, the tool 28 tends to screw into the chuck with its rotary axis not parallel to the rotary axis of the chuck, the forces applied to the tool by the thrust disc 31 when the tool comes into contact with the thrust disc 31 will be able to overcome any moment provided by the threads and the tool will tilt into a position in which the rotary axis of the tool tends to be parallel to the rotary axis of the chuck 10. It is easier to ensure that the two alignment faces are square to their respective rotary axes than it is to ensure that the threads are accurately formed.

11.

The centralising effect of the threads tends to ensure that the rotary axis of the tool is concentric with the rotary axis of the chuck and so the overall effect in this embodiment is for the rotary axis of the tool to be both parallel to and concentric with the rotary axis of the chuck, which of course means that the tool will be rotated by the chuck in the truest possible manner without the tool being mounted in a slightly eccentric or tilted manner.

In order to rotate the collars 15 and 30 they are formed with flats 15a and 30a which engage with an appropriately shaped spanner, for example a spanner having an aperture of the shape shown at 33 in Figure 7.

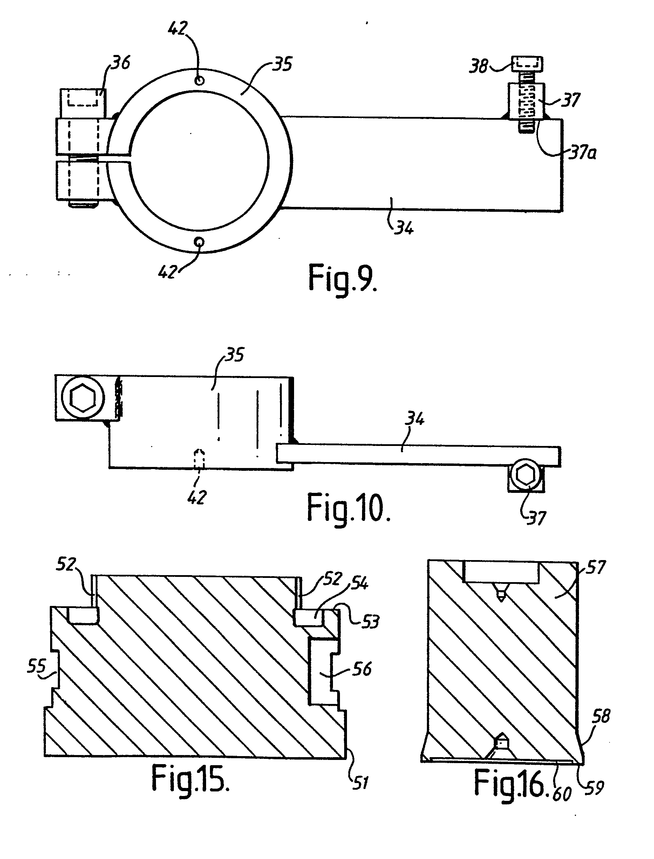

If it is desired to be able to apply release torque, when one wishes to remove a cutter, without the release torque tending to apply any torque to the chuck itself, which might cause the chuck to unscrew, then a release device of the form shown in Figures 9 and 10 may be used with a spanner of the form shown in Figures 7 and 8. The device shown in Figures 9 and 10 comprises an arm 34 provided with a locking collar 35 which can be passed around the chuck body and rigidly clamped to the chuck body by tightening clamping screw 36.

At the free end of the arm 34, there is a thrust block 37 into which is screwed a release screw 38.

The spanner 39 shown in Figure 7 is provided with a release screw thrust face 40. In use it is fitted over the collar which it is desired to unscrew, and is attached to the release device shown in Figures 9 and 10 by passing shoulder screws through two slots 41 and into tapped holes 42 in the clamping collar 35. The release device and spanner are initially positioned so that the thrust face 40 of the spanner butts against the face 37a (see Figure 9) of the thrust block 37, the release screw 38 having been backed off. If one then tightens the release screw 38 to apply thrust to the thrust face 40, the spanner is forced to rotate relative to the release device, and hence relative to the chuck body, hence unscrewing the collar 15 or 30, thus releasing axial loading on the tool so that the tool can be removed.

Figure 11 illustrates a somewhat similar embodiment to that shown in Figure 6 except that the chuck 10 is not a tail centre chuck and the thrust disc 31 is secured in a socket in the chuck by means of a single screw 31b.

Any tilting movement of the tool 41 will tend to take place about point 42. It will thus be clearly seen that because of the short length of the threaded portion 43 with respect to the diameter 44 any tilting forces P produced by poor alignment of the threads will provide an extremely small turning moment compared to the corrective turning moment that can be applied by forces Q acting between the alignment face of the thrust disc 31 and the alignment face of the tool.

To assist in keeping the extent of the threads as small as possible in the direction of the rotary axes, the thread is not formed symmetrically as shown in Figure 2 but is as shown in Figure 12. The thrust flanks 45 are at an angle of $20^{\circ}$ to the rotary axis whereas the opposing flanks 46 are at an angle of $45^{\circ}$.

The smaller the angle of the thrust flanks the better, so as to increase the centralising effect, but the angle must not be so small as to create a "Stick"

13.

taper.  The angle of the opposing flanks 46 is chosen so as to prevent or reduce the risk of thread shear. This angle should be as large as possible consistent with prevention of shear to give the maximum thrust flank contact area for a given axial length of thread.

In certain circumstances the thrust flanks may be slightly curved as indicated in dotted lines in Figure 12.  This form may better accommodate parallelism errors between the tool axis, tool shank thread axis, collar thread axes, and chuck thread axis.  The curved form alleviates concentrated stress at the crest and root due to misalignment.

The threaded connection between the collar 30 and chuck 10 at 47 in Figure 11 may be of similar form as shown in Figure 13, the thrust flanks 48 being at an angle of $26^{\circ}$ and the opposing flanks 49 being again at an angle of $45^{\circ}$.

Instead of being provided with spanner flats, the collar 30 of Figure 11 is provided with lugs projecting outwardly in the direction of the rotary axis.  The lugs are not visible in Figure 11 because one would not appear at all, Figure 11 being a sectional view, and the other lug is behind the tool 41.  The collar may be rotated by means of a spanner having recesses to receive the lugs.

In some instances the cutting head of the tool 41 may be substantially greater in diameter than the collar 30, in which case a ring type spanner could not be fitted over the tool.  In these circumstances a spanner having the form shown in Figure 14 may be used, the spanner being generally hook-shaped so that it can be hooked around the collar without having to be passed over the cutting head of the tool, and the projecting lug 50 of the spanner may be hooked around one of the lugs of the collar to obtain a purchase.

It is not essential for the alignment face of the chuck to be within the body of the chuck. For example the nose of the chuck may be ground square to the chuck axis to provide an alignment face and the tool may have the form shown in Figure 15. The tool, which has cutting teeth 51, is provided with a threaded formation 52 which can be screwed into an internal thread of the chuck body until a ground alignment face 53 of the tool abuts the ground nose of the chuck. The tool is undercut at 54 to facilitate the formation of the threaded portion 52. The tool is screwed in and unscrewed using a hook-type spanner which can be hooked around a guide groove 55 the spanner having an appropriately shaped nose which can be hooked into a recess 56 in the tool.

It is not essential for the tool to be formed with a screw thread, and the tool 57 shown in Figure 16 has a frustoconical shank 58. The shank is provided with an alignment face 59 recessed at 60.

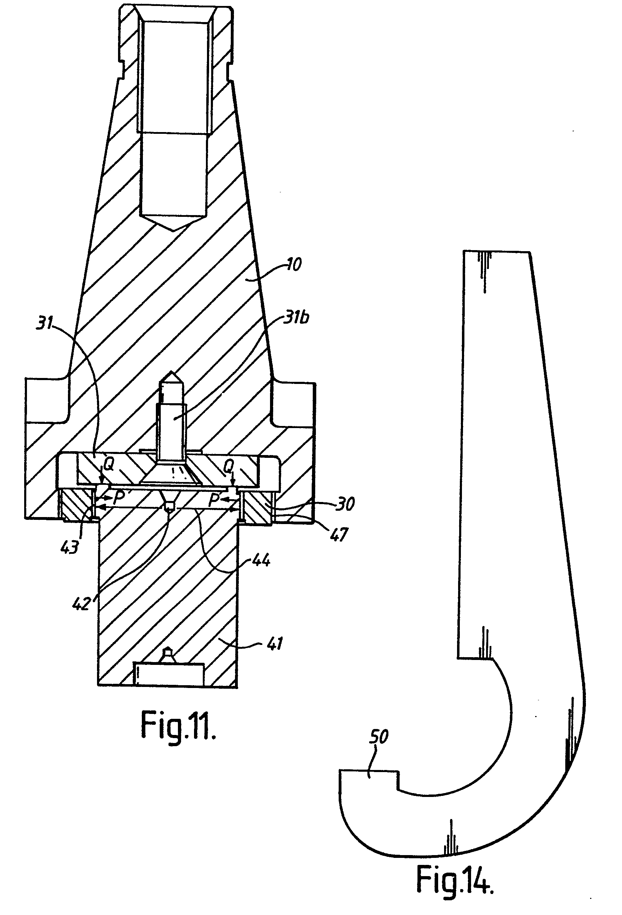

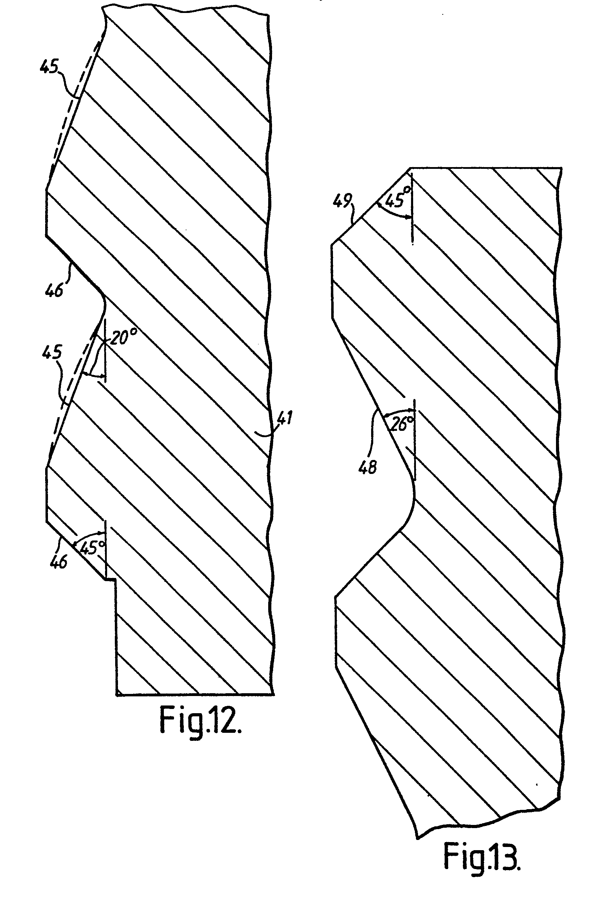

To urge the alignment face 59 towards an alignment face of the chuck, and to bring about a centralising effect, a collar 61 is used as shown in Figure 17. The collar has a frustoconical face 62 to mate with the face 58 and it has an external screw thread 63 to enable the collar to be screwed into a chuck. Spanner lugs 64 are also provided.

The axial length of the conical faces 58 and 62 is still very short in relation to their widths, and so as with the threaded formations described earlier, very little turning moment can be produced tending to tilt the tool, even if the conical faces are slightly misaligned, and the parallelism of the tool and chuck axes is still governed principally by the engagement of the alignment faces. Nevertheless the conical faces are easier to manufacture accurately than threaded formations. Although threads can be screw-cut on a lathe accurately, they tend to distort slightly during subsequent heat treatment.

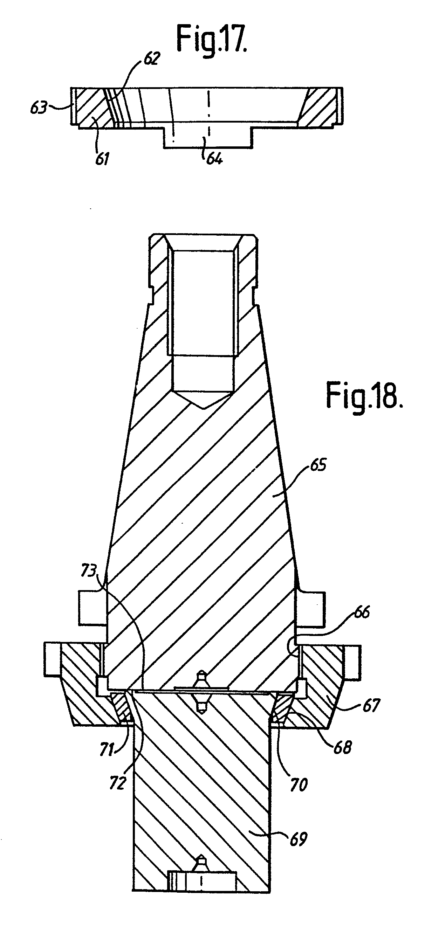

Turning now to Figure 18, this shows a chuck 65 having an external screw-thread 66 to receive a nut 67 screwed on to the outside of the chuck. The nut 67 has a frustoconical face 68 and is for use with a tool 69 having a complimentary frustoconical face 70. So that a single nut 67 can be used, with a variety of different diameter tools, a plurality of spacers are provided, one being shown at 71. The spacer has an inner frustoconical face to engage the face 70 of the tool and an outer frustoconical face to engage the face 68 of the nut.

The alignment face 72 of the tool abuts the nose 73 of the chuck, the nose being ground square to the rotary axis to constitute the alignment face of the chuck.

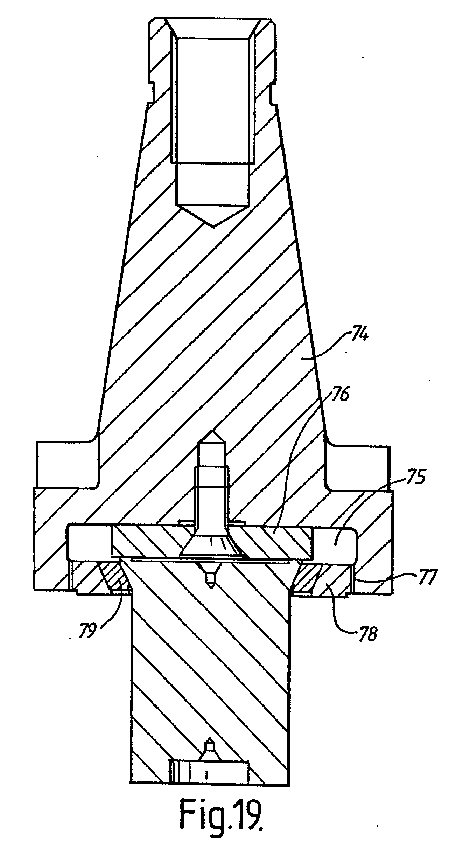

Figure 19 illustrates an embodiment in which the chuck 74 has a socket 75 in which a thrust disc 76 is fitted. The chuck has internal threads 77 to receive an externally threaded collar 78. As with the embodiment shown in Figure 18, a plurality of spacers are used, one being shown at 79, which fit between a frustoconical face of the tool and a frustoconical face of the collar.

The embodiments employing a conical formation, as opposed to a threaded formation, are not self-tightening, and so it may be necessary to use a torque wrench to tighten the collars or nuts to the appropriate extent.

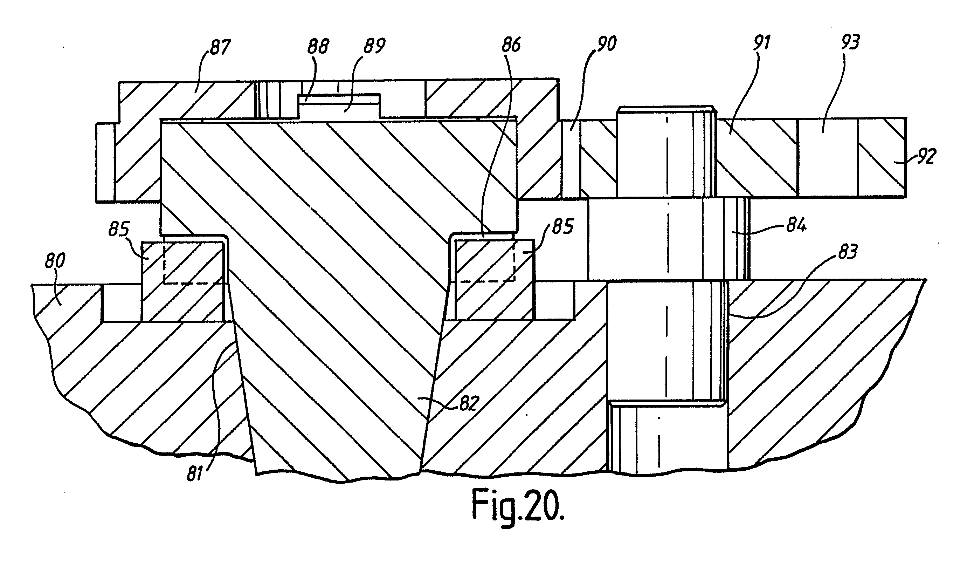

To facilitate the tightening of collars to the correct extent, and subsequent release of the collars to change a tool, a specially designed rig as shown in Figure 20 may be used. The rig has a body 80 which has a dummy machine tool bore 81 to receive a chuck 82. A cylindrical bore 83 is arranged adjacent to the bore 81. A pivot shaft 84 is fitted into the bore 83. Tenons 85 project from the body 80 of the rig to engage in the drive slots 86 of the chuck 82 to prevent the chuck from rotating in the rig.

To tighten a collar a cap 87 is fitted over the collar, the cap having recesses 88 to receive lugs 89 of the collar. The outer periphery of the cap 87 is formed with gear teeth 90. A gear quadrant 91 is fitted over the pivot shaft 84 with the teeth of the gear quadrant meshing with the teeth 90 of the cap 87. The quadrant 91 has an arm 92 projecting therefrom which has a square socket 93 therein to receive a torque wrench. If desired the torque wrench may be calibrated in terms of the diameters of the various tools that can be used with the chuck.

The rig forming the subject of this embodiment gives a mechanical advantage of 3.6 : 1 to reduce the required torque which must be applied to the torque wrench.

The rig may be provided in combination with a series of spacer sleeves to adapt the socket 81 to suit various chuck shanks.

Sleeves may be provided to fit within the cap 87 to adapt the cap to fit various sizes of smaller chuck body.

To release a tool torque is applied to the lever 92 by any suitable means, and once again the mechanical advantage will assist, this time in freeing the collar.

Because the object of the alignment faces is to maximise the extent to which the rotary axes of the chuck and tool are aligned, it is desirable to maximise the corrective turning moment applied to the tool by forces acting between the alignment faces. It is therefore desirable for the area of contact between the alignment faces to be as far from the rotary axis of the tool as possible. This is one reason why the rear end of the tool is recessed. This ensures that the forces Q shown in Figure 11, for example, act near the periphery of the tool, where they have most effect, and the forces are not spread over the central area of the tool, where they would be less effective in correcting alignment. Thus the diameter of the recess should be as large as possible consistent with leaving sufficient material at the periphery of the tool to withstand the crushing forces that will be applied.

Generally the ring or annular spigot which remains to withstand the forces may stand 0.5 millimetres proud of the end of the tool. The axial length of thread, for the threaded embodiments of the invention, may for example be 6.7 millimetres for tools comprising

18.

end mills having diameters of from 20 millimetres to
50 millimetres. The axial thread length may decrease
progressively for end mill diameters decreasing from
20 millimetres, being for example 3.9 millimetres for
a 10 millimetre diameter end mill. The ratios of
axial length of thread to end mill diameter are as
follows: for a 50 millimetre end mill, 0.134;
for a 20 millimetre end mill, 0.335; and for a
10 millimetre end mill, 0.390.

The invention is not restricted to the details
of the foregoing embodiments. For example, the
alignment faces need not necessarily be flat provided
that they are arranged to provide the necessary
corrective forces. For instance the end face of the
tool may be very slightly hollow ground so that the
tool effectively makes line contact with the alignment
face of the chuck, around the outer periphery of the
tool, thus moving the point of action of the forces
as far away as possible from the axis of the tool.

Another possibility would be for a rear face of
the tool to be slightly chamfered around its periphery,
the chamfer engaging with a complimentary shaped
alignment face in the chuck. The chamfered face might
for example be inclined at $5^{o}$ to the radius of the tool.
Such a tool might be easier to manufacture.

The thrust disc may be formed integrally with the
chuck.

For small diameter tools, the tools may be fitted
into an adapter which carries the necessary formation.
Thus the general principle of using an adapter as illustrated in Figure 5, is equally applicable to single-ended tools, and to embodiments of the invention using a frustoconical formation, rather than a threaded formation.

Where a collar is used having a frustoconical formation, the collar can in some circumstances be slit to allow the collar to expand into the chuck bore as the collar is forced on to the conical shank of a tool by a threaded collar.

The invention is applicable to any form of rotational cutting tool, and is not applicable just to milling cutters. The invention may for example be applicable to slot drills, ball-nose cutters, routing cutters, dovetail cutters, woodruff cutters, boring bars, other drills, tapping heads. The principle of the invention is also applicable not just to tools themselves, but also to arbors and tool holders, for example milling stub arbors.

The coupling principle which results in alignment to axes may also be applicable to the coupling together of other items.

Some cutting or drilling operations are carried out by holding a tool stationary in a chuck or other tool holder and moving the workpiece. With such an arrangement it can still be equally important for the tool to be aligned accurately in the tool holder and the invention can have useful applications in this field.

CLAIMS

1.  A rotary cutting tool, the shank of the tool or a part attached to the shank having a formation for use in holding the tool within a chuck, characterised in that the length of the formation (29) in the direction of the rotary axis of the tool is small in relation to the width of the formation (29), and the tool has an alignment face (32) accurately positioned in relation to the rotary axis of the tool, the formation being operable to urge the alignment face (32) against a complimentary alignment face of a chuck to make the rotary axis of the tool as parallel as possible to the rotary axis of the chuck, the relatively short length of the formation in relation to the width of the formation reducing any turning moment about a radial axis caused by any misalignment or malformation of the formation and hence increasing the extent to which engagement of the alignment faces controls the parallelism of the rotary axes of the tool and the chuck.

2.  A rotary cutting tool as claimed in Claim 1, in which the formation (32) is also arranged to centralise the cutting tool in a chuck into which the tool is to be fitted, in order to make the rotary axis of the tool concentric with the rotary axis of the chuck.

3. A rotary cutting tool as claimed in Claim 2, in which the formation comprises a screw-thread, the angle which flanks of the thread make with the rotary axis of the tool being sufficiently low such that when the tool is connected to a member having a complimentary thread, relative longitudinal movement between the tool and the member brings about a centralising and gripping action between the tool and the member.

4. A rotary cutting tool as claimed in Claim 3, in which the said angle is less than $60^{\circ}$.

5. A rotary cutting tool as claimed in Claim 4, in which the said angle is in the range $15^{\circ}$ to $25^{\circ}$.

6. A rotary cutting tool as claimed in Claim 4 or Claim 5, in which the thread formation is not symmetrical.

7. A rotary cutting tool as claimed in claim 6, in which the angle which the thrust flanks make with the rotary axis of the tool is substantially less than the angle which the non-thrust flanks make with the rotary axis of the tool.

8. A rotary cutting tool as claimed in Claim 1 or Claim 2, in which the formation comprises a frustoconical surface.

9.  A rotary cutting tool as claimed in Claim 8, in combination with a collar having a complimentary frustoconical surface, the collar having attachment means to draw the collar on to a chuck to cause the frustoconical surface of the collar to act against the frustoconical surface of the tool and thus urge the alignment face of the tool towards the alignment face of the chuck.

10.  A rotary cutting tool as claimed in Claim 9, in which the attachment means comprise a screw-thread engageable with the screw-thread of the chuck.

11.  A rotary cutting tool as claimed in Claim 10, in combination with an intermediate member which fits between the tool and a collar or nut, the intermediate member having internal and external frustoconical faces.

12.  A rotary cutting tool as claimed in any one of the preceding claims, in combination with a chuck having an alignment face which is complimentary to the alignment face of the tool.

13.  A rotary cutting tool as claimed in Claim 12, in which the alignment face of the chuck comprises. the base of a socket in the chuck body, the base being formed square to the rotary axis of the chuck.

23.

14. A rotary cutting tool as claimed in Claim 13, in which the base of the socket is formed by a thrust disc fitted into the chuck.

15. A rotary cutting tool as claimed in Claim 12, in which the alignment face of the chuck comprises an external face of the chuck.

16. A rotary cutting tool as claimed in any one cf the preceding claims, in which the formation is formed on an adapter in which the tool is fitted.

17. A rotary cutting tool as claimed in any one of the preceding claims, in which the length of the formation is equal to less than half the width of the formation.

1/9

Fig.1a.

Fig.1b.

16   16   16   16

17°

A

Fig.2.

19

18

21

9·5S

30S

21

Fig.3.

28

24

Fig.4.

25

26

27  Fig.5.

3/9

Fig.6.

Fig.7.

Fig.8.

4/9

Fig.9.

Fig.10.

Fig.15.

Fig.16.

0079700

5/9

10

31

31b

Q Q

P P

30

43 47

42 44

41

Fig.11.

50

Fig.14.

45

46

45

20°

41

46 45°

**Fig.12.**

49 45°

26°

48

**Fig.13.**

**Fig.17.**

**Fig.18.**

74

76

75

77

79

78

Fig.19.

Fig.20.

0079700